# EUROPÄISCHE PATENTSCHRIFT

(11) **EP 2 599 734 B1**
(45) Veröffentlichungstag und Bekanntmachung des Hinweises auf die Patenterteilung: **06.04.2016**
(21) Anmeldenummer: 13001032.5
(22) Anmeldetag: 20.10.2010
(51) Int. Cl.: B65D 77/02, B65D 77/12, B65D 85/10, B65B 19/22

(54) **Packungen insbesondere für Zigaretten**
Package, in particular for cigarettes
Emballage, en particulier pour des cigarettes

(30) Priorität: 09.12.2009 DE 102009057373; 23.12.2009 DE 102009060134
(43) Veröffentlichungstag der Anmeldung: 05.06.2013
(62) Teilanmeldung aus: 10781817.1
(73) Patentinhaber: Focke & Co. (GmbH & Co. KG), 27283 Verden (DE)
(72) Erfinder: Buse, Henry, 27374 Visselhövede (DE); Lohmann, Reinhard, 27383 Scheeßel (DE)
(74) Vertreter: Ellberg, Nils

(56) Entgegenhaltungen:
- EP-A1- 0 007 423
- WO-A1-98/49072
- WO-A1-2009/098297
- DE-A1- 19 521 476
- GB-A- 587 956
- GB-A- 2 451 180
- IT-A1- BO20 080 080

## Beschreibung

Die Erfindung betrifft eine Packung für stückiges Verpackungsgut, insbesondere für Zigaretten, bestehend aus einer Außenpackung vorzugsweise in der Ausführung als Klappschachtel und einer Innenpackung als Dichtblock mit einer den Packungsinhalt, insbesondere eine Zigarettengruppe, umgebenden Innenzuschnitt aus vorzugsweise aroma- und feuchtigkeitsdichter, thermisch siegelbarer Folie, die im Bereich einer Innen-Stirnwand eine mehrfach benutzbare Öffnungshilfe und im Bereich von Seitenwänden der Innenpackung durch thermisches Siegeln miteinander verbundene Faltlappen aufweist, gemäß dem Oberbegriff des Anspruchs 1.

Eine Zigarettenpackung der eingangs genannten Art ist aus der Praxis bekannt. Bei diesem Stand der Technik ist ein Zigarettenblock bzw. ein Dichtblock mit einer Zigarettengruppe in einer Klappschachtel als Außenpackung angeordnet. Der Zuschnitt der Innenumhüllung ist mit einer mehrfach benutzbaren Öffnungshilfe versehen. Diese besteht aus einer innerhalb des Zuschnitts der Innenumhüllung durch Stanzlinien definierten Verschlusslasche und einer äußeren, die Verschlusslasche überdeckenden und mit einem Kleber versehenen Betätigungslasche. Der Benutzer erfasst zum Öffnen und Schließen des Dichtblocks die Betätigungslasche. Der Zuschnitt des Dichtblocks ist so um die Zigarettengruppe herurmgefaltet, dass einander überdeckende Faltlappen im Bereich von schmalen Seitenflächen und im Bereich eines Bodens entstehen. Die kuvertartig angeordneten Faltlappen sind durch thermisches Siegeln miteinander verbunden. Innerhalb des Dichtblocks ist ein Innenkragen aus Karton positioniert, der Seitenlappen im Bereich der Seitenflächen und einen Bodenlappen im Bereich der Bodenfläche aufweist, jeweils zum Schutz der Zigaretten gegen Wärme und Druck beim thermischen Siegeln der Faltlappen.

Eine gattungsgemäße Packung ist aus der IT 2008 BO 00080 bekannt. Die Erfindung befasst sich mit Verbesserungen dieser und ähnlicher (Zigäretten-)Packungen. Insbesondere geht es um Voraussetzungen für eine leistungsfähige Fertigung der Packungen:

Eine erfindungsgemäße Packung weist die Merkmale des Anspruchs 1 auf. Es ist demnach vorgesehen, dass Faltlappen im Bereich einer Innen-Rückwand des Innenzuschnitts als Flossenfaltung ausgebildet und durch thermisches Siegeln außerhalb des Bereichs der Zigarettengruppe zu einer Flossennaht miteinander verbunden sind, wobei die Flossennaht mit Abstand zu Bereichen von einander mehrfach überdeckenden Faltlappen im Bereich der Innen-Seitenwände angeordnet ist.

Erfindungsgemäß ist eine spezielle Faltung für die siegelbare Innenumhüllung gewählt, die keine thermischen und mechanischen Belastungen auf die Enden der Zigaretten überträgt. Durch dien Flossennaht wird keine Wärme und Druck auf die Zigaretten übertragen. Im Bereich der Seitenflächen können einander überdeckende Faltlappen durch Siegeln gegen die Seitenschenkel eines Innenkragens miteinander verbunden werden. Der Innenkragen ist als einfacher Zuschnitt ausgebildet, mit U-förmigem Querschnitt, nämlich mit Stütz- bzw. Schutzlaschen lediglich im Bereich der schmalen Seitenwände, jedoch nicht im Bereich der Rückwand, die die Flossennaht aufweist.

Gemäß der Erfindung ist vorgesehen, dass Faltlappen des Innenzuschnitts Couvert-artig gefaltet sind unter Einbeziehung von Ecklappen des Innenzuschnitts, und dass die Flossennaht außerhalb eines Bereichs der einander überlappenden Ecklappen und Faltlappen im Bereich der Couvertfaltung angeordnet ist, insbesondere mit einem geringen Abstand von wenigen Millimetern, vorzugsweise mit einem Abstand von 2 bis 3 Millimetern, zu einem Bereich von überlappenden Ecklappen und Faltlappen.

Eine weitere Besonderheit besteht darin, dass Faltlappen des Innenzuschnitts im Bereich der Innen-Seitenwänden unter Bildung einer wechselseitigen Überdeckung in der Ebene der Innen-Seitenwände gefaltet und durch thermisches Siegeln miteinander verbunden sind, wobei die die Flossennaht aufweisende Faltlappen der Innen-Rückwand am Packungsinhalt anliegen und die Faltlappen der Innen-Vorderwand jeweils auf die die Flossennaht aufweisenden Faltlappen der Innen-Rückwand gefaltet sind.

Bevorzugte Ausführungen und vorteilhafte Weiterbildungen der erfindungsgemäßen Vorrichtung ergeben sich aus den Unteransprüchen.

Ein bevorzugtes Ausführungsbeispiel der Erfindung wird nachfolgend anhand der Zeichnung beschrieben. In dieser zeigen:
- Fig. 1: eine (Zigaretten-)Packung des Typs Klappschachtel in räumlicher Darstellung,
- Fig. 2: ein Zuschnitt für einen Innenkragen in ausgebreiteter also ungefalteter Stellung,
- Fig. 3: eine schematische Darstellung der Faltung eines Dichtblocks,
- Fig. 4: ein gefalteter Dichtblock,
- Fig. 5: eine Vorrichtung zur Herstellung der Packungen gemäß Fig. 1 in schematischer räumlicher Darstellung,
- Fig. 6: eine Seitenansicht der Vorrichtung gemäß Fig. 5,
- Fig. 7: eine Einzelheit der Vorrichtung im Bereich VII der Fig. 5 in vergrößerter räumlicher Darstellung,

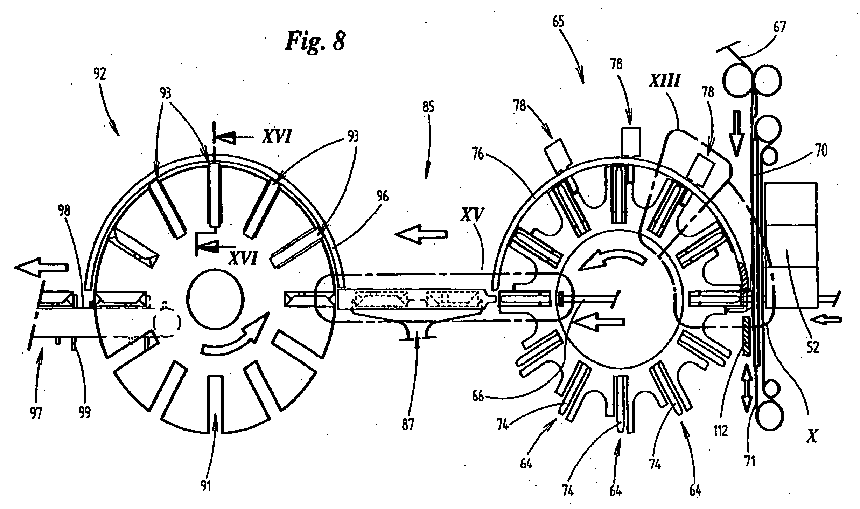

- Fig. 8: eine Einzelheit der Vorrichtung gemäß Fig. 5 in vergrößerter Seitenansicht,
- Fig. 9: ein Vertikalschnitt durch die Vorrichtung entlang Schnittlinie IX-IX in Fig. 6,
- Fig. 10 und Fig. 11: eine Einzelheit der Vorrichtung gemäß Fig. 8 im Bereich X in vergrößerter Seitenansicht, während verschiedener Phasen des Bewegungsablaufs,
- Fig. 12: ein Schnitt durch die Vorrichtung entlang Schnittlinie XII-XII in Fig. 11.

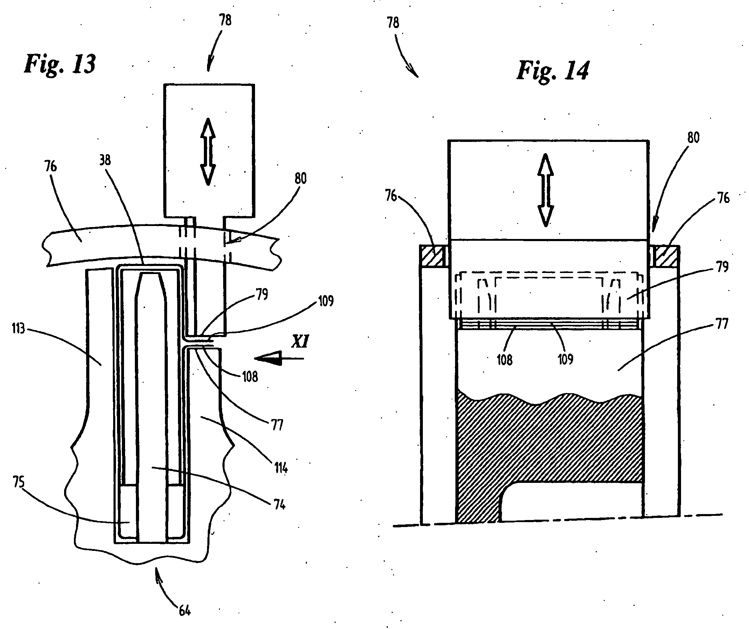

- Fig. 13: eine Einzelheit der Vorrichtung im Bereich XIII von Fig. 8 in vergrößerter Seitenansicht,
- Fig. 14: eine Seitenansicht zur Darstellung gemäß Fig. 13,
- Fig. 15: eine Einzelheit der Vorrichtung gemäß Fig. 8 im Bereich XV in vergrößerter Seitenansicht,
- Fig. 16: ein Schnitt durch die Vorrichtung entlang Schnittlinie XVI-XVI in Fig. 8 in vergrößertem Maßstab, und

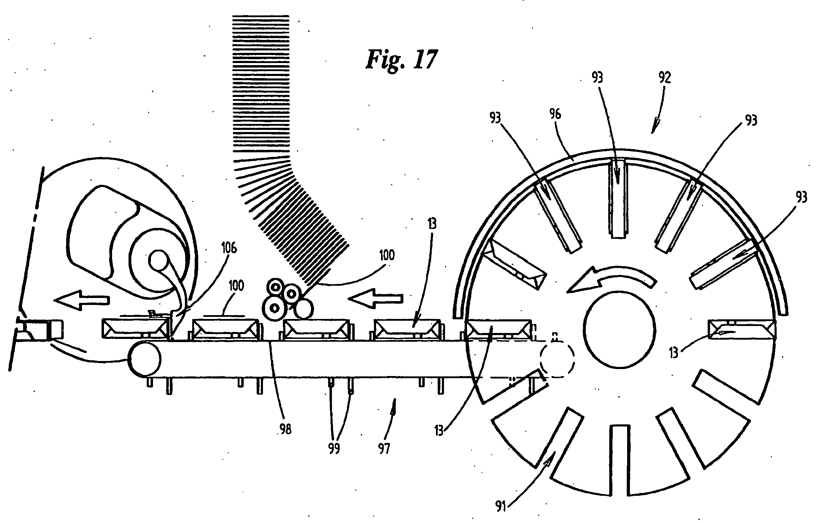

- Fig. 17: eine Einzelheit der Vorrichtung gemäß Bereich XVII in Fig. 6 in vergrößerter Seitenansicht.

Die vorliegend dargestellte Packung 10 ist vorrangig für die Aufnahme von Zigaretten bestimmt, wobei eine Anzahl von Zigaretten in Formation zu einer Zigarettengruppe 11 als Packungsinhalt zusammengefasst ist. Im Aufbau besteht die (Zigaretten-)Packung 10 aus einer Außenpackung 12 und einer Innenpackung 13. Die Außenpackung 12 ist im vorliegenden Fall eine Klappschachtel mit standardmäßigem Aufbau, nämlich mit einem (unteren) Schachtelteil 14 und einem (oberen) Deckel 15 sowie gegebenenfalls einem Kragen 16. Die Außenpackung 12 kann auch in anderer Weise ausgebildet sein, insbesondere als shell-and-slide-Packung oder als Kappenschachtel.

Schachtelteil 14 und Deckel 15 bestehen aus einem einstückigen Zuschnitt (nicht gezeigt) mit Bereichen für eine Schachtel-Vorderwand 17, Bodenwand 18, Schachtel-Rückwand 19, Deckel-Rückwand 20, Stirnwand 21 und Deckel-Vorderwand 22. Schachtel-Seitenwände 23 und Deckel-Seitenwände 24 bestehen jeweils aus einander überdeckenden Seitenlappen, sind also doppellagig ausgebildet.

Innerhalb der so ausgebildeten Außenpackung 12 ist eine blockförmige Innenpackung 13 angeordnet, und zwar in der Ausführung als Dichtblock 25. Der Packungsinhalt, insbesondere die Zigarettengruppe 11, ist allseitig von einem Innenzuschnitt 26 aus Folie umgeben, der aufgrund seiner Zusammensetzung vorzugsweise feuchtigkeits- und aromadicht ist. Darüber hinaus ist das Material des Innenzuschnitts 26 thermisch siegelbar, sodass Faltlappen durch Wärme und Druck miteinander verbunden werden können.

Eine Besonderheit des Dichtblocks 25 bzw. des Innenzuschnitts 26 ist eine mehrfach benutzbare, also wiederverschließbare Öffnungshilfe. Diese besteht aus einer Öffnungslasche 27, die eine Entnahmeöffnung freilegt in einer innenliegenden Folie bzw. Folienlage freilegt. Die Öffnungslasche 27 ist vorliegend durch eine U-förmige Schwächungslinie 28, nämlich eine Perforation, eine durchgehende Stanzlinie oder andere geeignete Materialschwächung begrenzt. Beim Öffnen des Dichtblocks 25 wird die Öffnungslasche 27 mit Hilfe eines Betätigungsorgans, nämlich einer Betätigungslasche 29, in die Öffnungsstellung gebracht.

Die Betätigungslasche 29 ist Teil des Innenzuschnitts 26 bzw. Teil einer Außenlage des Innenzuschnitts 26. Die Betätigungslasche 29 ist von einer im Wesentlichen U-förmigen Schwächungs- oder Stanzlinie 30 begrenzt. Die Betätigungslasche 29 ist größer als die Öffnungslasche 27 und überdeckt diese mit einem vorzugsweise an drei Seiten gebildeten (U-förmigen) Verschlussstreifen 31. Dieser liegt an einem die Entnahmeöffnung umgebenden Randstreifen einer Innenlage als Träger der Öffnungslasche 27 an. Die Betätigungslasche 29 ist mindestens im Bereich des Verschlussstreifens 31 mit einem dauerhaft wirkenden Kleber versehen.

Der Zuschnitt für den Dichtblock 25, also der Innenzuschnitt 26, ist durch Faltlinien in Bereiche aufgeteilt für eine Innen-Vorderwand 32, eine Innen-Stirnwand 33 und eine Innen-Rückwand 34. Über die volle Länge des Innenzuschnitts 26 erstrecken sich beidseitig Seitenstreifen zur Bildung von miteinander verbundenen Innen-Seitenlappen 35. An freien Enden des langgestreckten Innenzuschnitts 26 im Bereich der Innen-Rückwand 34 sind Faltlappen 108, 109 gebildet, die sich über die volle Breite des Innenzuschnitts 26 erstrecken. Diese Faltlappen sind in besonderer Weise miteinander zu einer Flossennaht 37 verbunden.

Zum Erfassen der Betätigungslasche 29 ist diese im Bereich der Innen-Vorderwand 32 mittig mit einer Griffzunge 45 versehen. Diese befindet sich in einem klebstofffreien Bereich. Die Griffzunge 45 ist so angebracht, dass sie stets oberhalb der Schachtel-Vorderwand 17 liegt, also frei erfasst werden kann. Weiterhin ist die Griffzunge 45 vorzugsweise gegen die Betätigungslasche 29 umgefaltet und dort mit einem Kleber fixiert. Auf diese Weise lässt sich die Betätigungslasche 29 leichter greifen.

Eine weitere Besonderheit ist die konstruktive Ausbildung des Dichtblocks 25 bzw. der Faltung des Innenzuschnitts 26. Der Innenzuschnitt 25 ist so gefaltet, dass rückseitig, nämlich im Bereich einer Innen-Rückwand 34, überstehende Faltlappen 108, 109 des Innenzuschnitts 26 angeordnet sind unter Bildung der Flossennaht 37. In diesem Bereich kann die thermische Siegelung der Faltlappen 108, 109 ohne Übertragung von Druck und/oder Wärme auf die Enden der Zigaretten übertragen werden. Die quer abstehende Flossennaht 37 wird danach gegen die Innen-Rückwand 34 umgefaltet. Randseitig über den Packungsinhalt überstehende Endbereich der Flossennaht 37 werden danach zusammen mit dem entsprechenden Faltlappen 110 seitlich in die Ebene der Innen-Seitenwände 35 des Dichtblocks 25 gefaltet. Darüber werden danach die aus der Ebene der Innen-Vorderwand 32 ragenden Faltlappen 111 gelegt und gesiegelt.

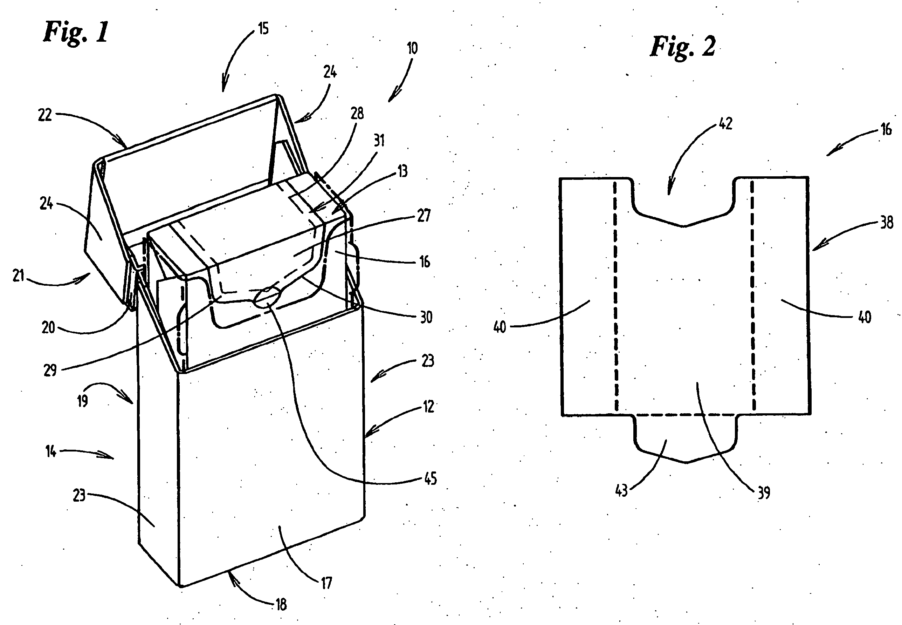

Zum Schutz des Packungsinhalts, nämlich der Zigaretten, beim Siegeln der Seitenlappen im Bereich der Innen-Seitenwände 35 ist innerhalb des Dichtblocks 25 eine Abdeckung angeordnet, die sich mindestens im Bereich der Innen-Seitenwände 35 der Innen-Vorderwand 32 erstreckt. Im Bereich der Innen-Rückwand 34 ist keine Abdeckung vorgesehen. Es handelt sich vorliegend um einen Innenkragen 38 (Fig. 2), der die Zigarettengruppe 11 teilweise umgibt.

Der, Innenkragen 38 erstreckt sich bei diesem Ausführungsbeispiel über die volle Länge bzw. Höhe der Zigarettengruppe 11 mit einer Kragen-Vorderwand 39 im frontseitigen Bereich. Kragen-Seitenwände 40 werden gegen seitliche Bereiche der Zigarettengruppe 11 umgefaltet und erstrecken sich im Bereich der Innen-Seitenwände 35, zur Abdeckung der Zigarettengruppe 11 gegen Wärme und Druck. Eine Ausnehmung 42 im Bereich der Kragen-Vorderwand 39 ermöglicht die Entnahme der Zigaretten bei geöffnetem Dichtblock 25. Eine weitere Besonderheit ist ein am unteren Ende der Kragen-Vorderwand 39 gegenüberliegend der Ausnehmung 42 ausgebildeter Fortsatz 43, derart dass der Innenkragen 38 im Wesentlichen abfallfrei aus einer fortlaufenden Materialbahn 54 herausgetrennt werden kann.

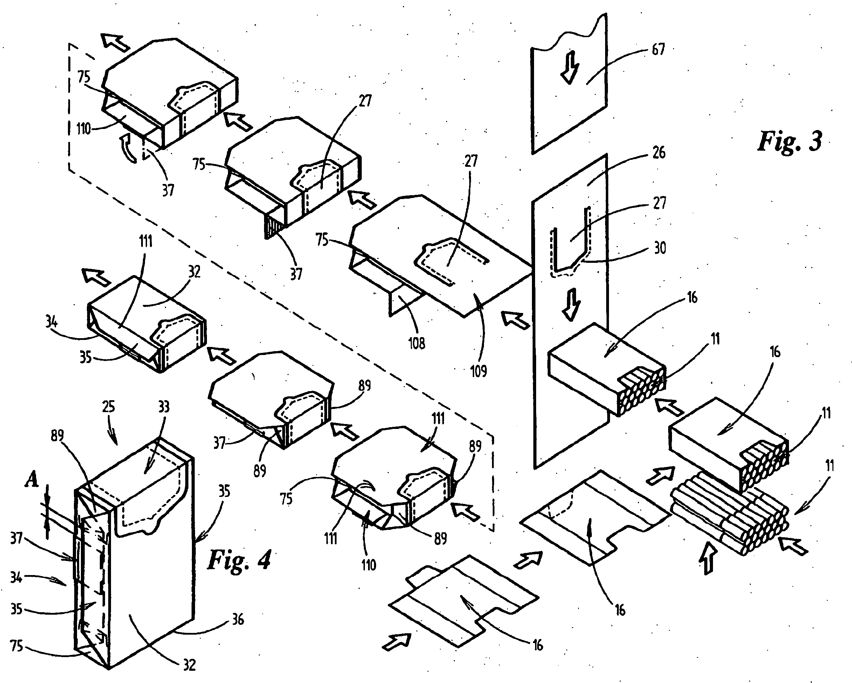

Eine Besonderheit ist das Herstellungsverfahren für den Dichtblock 25 (Fig. 3). Zunächst wird ein Zuschnitt für den Innenkragen 38 in U-Form gefaltet und der Fortsatz 43 in die Ebene der Innen-Bodenwand 36 gelegt und der formierten Zigarettengruppe 11 zugeführt. Danach werden vorbereitete Innenzuschnitte 26 bereitgehalten, nämlich in einer (vertikalen) Querebene zugeführt. Die Zigarettengruppe 11 ist so positioniert, dass Filterenden in Transportrichtung nach hinten weisen. In Verbindung mit Führungen bzw. Faltorganen wird aufgrund des Transports der Innenzuschnitt 26 U-förmig um Zigarettengruppe 11 und Innenkragen 38 herumgefaltet.

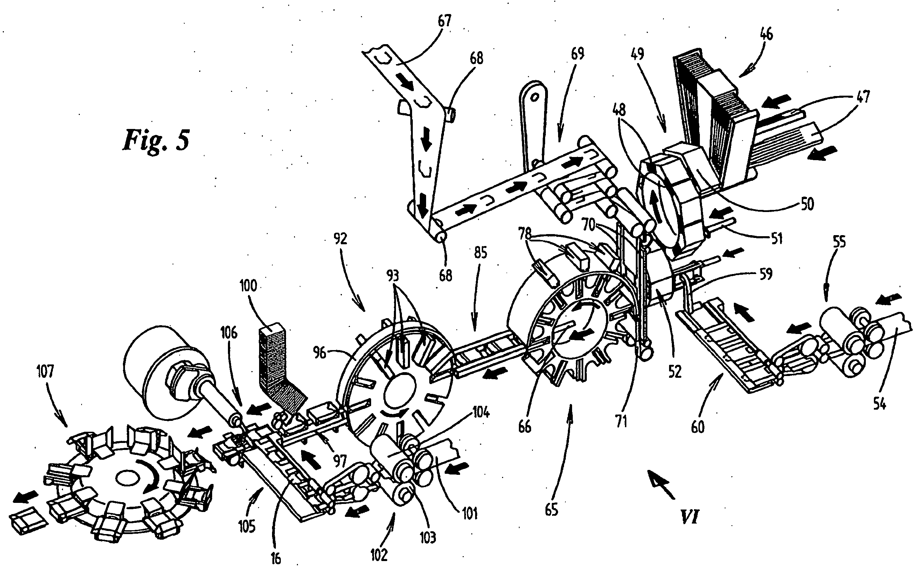

Mit dem ersten U-Faltschritt werden auch frontseitige Ecklappen 75 gefaltet (Fig. 5). Sodann wird die Faltung im Bereich der Innen-Rückwand 34 ausgeführt, nämlich die Herstellung der Flossennaht 37 und deren Siegelung. Als nächstes wird die Flossennaht 37 gegen die Innen-Rückwand 34 umgelegt und rückseitige Ecklappen 89 gefaltet. Darnach werden die Faltlappen 110, 111 in den Bereich der Innen-Seitenwände 35 gefaltet. Danach erfolgt die Siegelung der einander überlappenden Faltlappen 110, 111. Der so hergestellte Dichtblock 25 wird in geeigneter Weise in die Außenpackung 12 eingeführt.

Eine Besonderheit besteht darin, dass die Flossennaht 37 mit Abstand zu den mehrfach überlappenden Faltlappen 110, 111 und Ecklappen 75, 89 im Bereich der Innen-Seitenwand 35 angeordnet ist. Es geht dabei insbesondere um den Bereich, in dem sich die Couvert-artig gefalteten Faltlappen 110, 111 und die Ecklappen 75 bzw. 89 überlappen, wodurch eine mehrlagige Konstruktion entsteht. Zu diesem Bereich ist die Flossennaht 37 mit einem Abstand A angeordnet. Dieser Abstand A beträgt wenige Millimeter, insbesondere 2 bis 3 Millimeter.

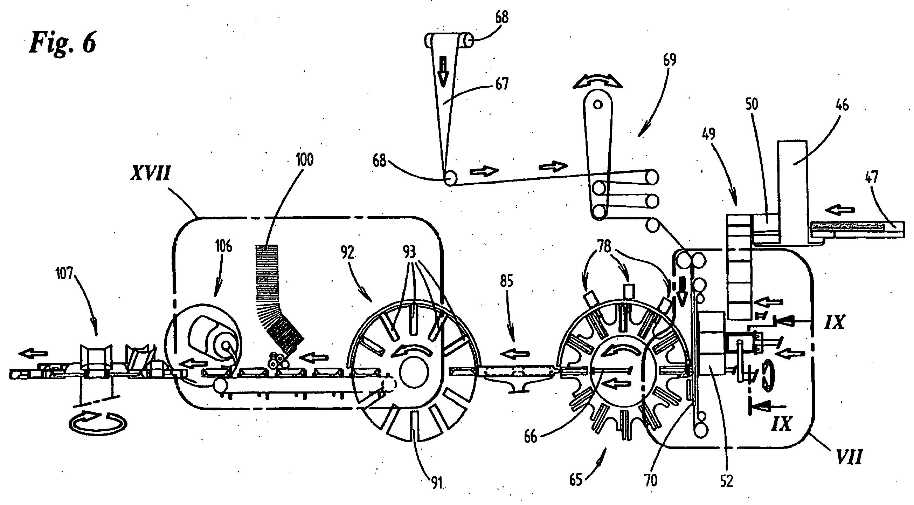

Nachfolgend wird nur zum besseren Verständnis der beanspruchten Packung auch eine bevorzugte Vorrichtung sowie ein Verfahren zur Herstellung der in Fig. 1 gezeigten Packungen 10 erläutert. Fig. 5 und 6 zeigen eine entsprechend Vorrichtung in schematischer räumlicher Darstellung bzw. in Seitenansicht.

Die Zigaretten werden in aufrechten Schächten eines Zigarettenmagazins 46 bereitgehalten und in bekannter Weise durch Stößel-Pakete 47 aus dem Zigarettenmagazin 46 ausgeschoben. Jedes Stößel-Paket 47 erfasst dabei eine Zigarettengruppe 11 von nebeneinander und übereinander liegenden Zigaretten und schiebt diese aus dem Zigarettenmagazin 46 in Taschen 48 eines Revolvers 49. Zwischen Zigarettenmagazin 46 und Revolver 49 ist zudem eine Zigaretten-Weiche 50 angeordnet, die die Zigaretten-Formation bildet.

Durch Stößel-Pakete 47 werden bei jedem zweiten Takt des Revolvers 49 zusammen betrieben, so dass bei jeder Stillstandsphase des Revolvers 49 zwei Taschen 48 befüllt werden. Danach wird der Revolver 49 zwei Positionen weiterbewegt, sodass die nächsten Zigarettengruppen 11 eingeführt werden können.

Der Revolver 49 ist quer zur Ausschubrichtung der Stößel-Pakete 47 angeordnet und dreht um eine horizontale Achse. Die Zigarettengruppen 11 werden entsprechend seitlich in Taschen 48 eingeschoben, die sich in einer oberen Stellung befinden. Ausgeschoben werden die Zigarettengruppen 11 in einer unteren Stellung nach Drehung des Revolvers 49 in mehreren Schritten. Hierzu dient ein Schieber 51, der eine Zigarettengruppe 11 in horizontaler Richtung ausschiebt und in an einem anschließenden Revolver 52 angeordnete Taschen 53 einschiebt. In diesen Taschen 53 befinden sich zu diesem Zeitpunkt bereits die U-förmig gefalteten Innenkragen 38.

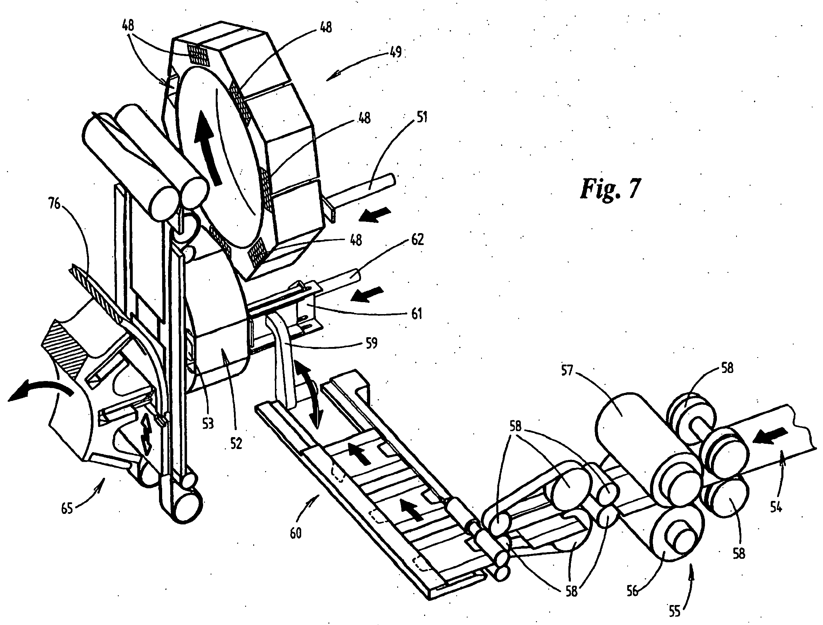

Die innenkragen 38 werden dem Revolver 52 in einer im Wesentlichen horizontalen Ebene zugeführt. Dies ist in Fig. 7 gezeigt. Die Innenkragen 38' werden in Form einer fortlaufenden Materialbahn 54 entlang einer horizontalen Förderstrecke transportiert und durch eine Schneideinrichtung 55 vereinzelt. Die Schneideinrichtung 55 besteht im vorliegenden Fall aus einer Messerwalze 56 und einer zugehörigen Gegenwalze 57, die die Materialbahn 54 in bekannter Weise zertrennen.

Danach werden die abgetrennten Innenkragen 38 durch aufeinanderfolgende Förderwalzenpaare 58 auf Abstand zueinander gebracht und entlang des Querförderers 60 abgefördert in den Bereich eines Stempels 59, mit dem die Innenkragen 38 nacheinander aus der Transportbahn 60 entnommen und durch Schwenken des Stempels 59 um 90° in eine Formtasche 61 eingedrückt werden. Dabei wird der Innenkragen 38 in die U-Form gefaltet. Während des Transports der Innenkragen 38 entlang des Querförderers 60 wird auch der Fortsatz 43 teilweise umlegt, nämlich quer zur Kragen-Vorderwand 39. Dies kann durch geeignete Faltmittel wie beispielsweise Faltweichen erfolgen.

Der gefaltete Innenkragen 38 wird dann durch einen Schieber 62, der auf die Formtasche 61 einwirkt in eine Tasche 53 des taktweise betriebenen Revolvers 52 gefördert und an diese übergeben.

Nachdem die gefalteten Innenkragen 38 in die Tasche 53 des Revolvers 52 eingeführt sind, wird der Revolver 52 taktweise um zwei Positionen weiterbewegt, sodass die Zigarettengruppen 11 in dieser Station entlang einer horizontalen Ebene in die Taschen 53 eingeschoben und mit den darin bereitgehaltenen Innenkragen 38 vereinigt werden können. Nach weiterer Drehung des Revolvers 52 um 180° kann die Zigarettengruppe 11 mit darumgelegtem Innenkragen 38 in horizontaler Ebene ausgeschoben werden. Hierzu dient ein weiterer Schieber 63.

Mit Hilfe des Schiebers 63 werden die Zigarettengruppen 11 mit darumgelegtem Innenkragen 38 in Taschen 64 eines anschließenden Faltrevolvers 65 eingeschoben.

Auch der Faltrevolver 65 dreht um eine horizontale Achse und ist taktweise angetrieben wie der Revolver 52. Der Faltrevolver 65 ist trommelartig ausgebildet mit einem Schieber 66 zum Ausschub von Innenpackungen 13. Faltrevolver 65 und Revolver 52 sind in um 90° zueinander versetzten Ebenen angeordnet, wobei zur Übergabe der Zigarettengruppen 11 jeweils eine radial angeordneten Tasche 64 fluchtend mit einer Tasche 53 angeordnet ist.

Während der Übergabe der Zigarettengruppen 11 mit darumgewickeltem Innenkragen 38 vom Revolver 52 auf den Faltrevolver 65 wird der Innenzuschnitt 26 zugeführt und um die Zigarettengruppe 11 und den Innenkragen 38 herumgewickelt.

Der Innenzuschnitt 26 wird von oben zugeführt, nämlich in Form einer fortlaufenden Materialbahn 67, die über mehrere Umlenkrollen 68 in den Bereich eines Pendelspeichers 69 geführt wird. Im Anschluss an den Bereich des Pendelspeichers 69 werden einzelne Innenzuschnitte 26 aus der Materialbahn herausgetrennt (nicht im Detail gezeigt). Die vereinzelten Innenzuschnitt 26 werden dann randseitig durch zwei im Abstand angeordnete Saugförderer 70 übergeben und im Förderweg der Zigarettengruppen 11 bereitgehalten. Die Saugförderer 70 sind in einem derartigen Abstand angeordnet, dass die Zigarettengruppen 11 zwischen den beiden Saugförderern 70 bzw. Fördertrumen 71 derselben hindurchbewegt werden können unter Mitnahme des Innenzuschnitts 26. Dabei wird der Innenzuschnitt 26 U-förmig um die Zigarettengruppe 11 mit Innenkragen 38 herumgelegt. Die Innenkragen 38 werden mittels Unterdruck an den Fördertrumen 71 des Saugförderers 70 gehalten.

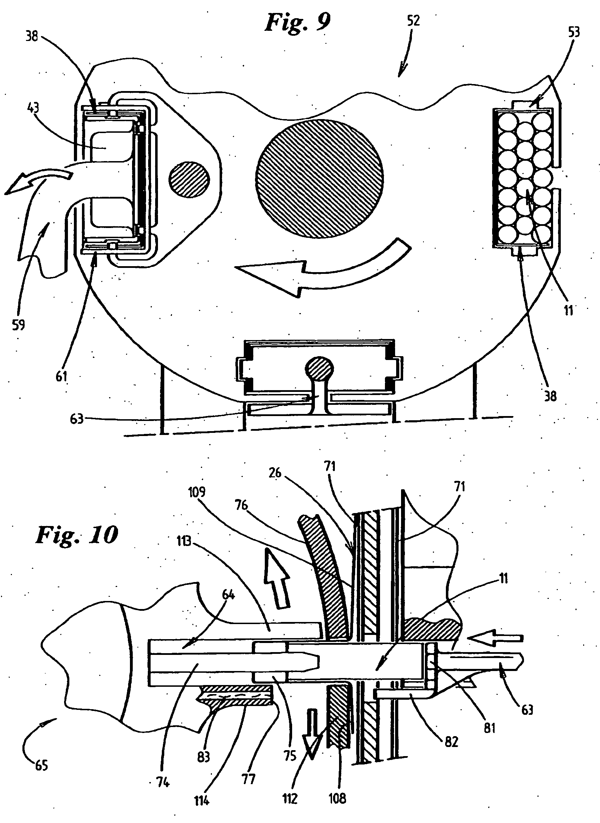

Der Faltrevolver 65 ist taktweise angetrieben und verfügt über eine Anzahl von radial gerichteten Taschen 64 zur Aufnahme eines teilweise in den Innenzuschnitt 26 eingehüllten Zigarettengruppe 11 mit Innenkragen 38. Seitlich an den Taschen 64 sind Faltfinger 74 angeordnet, die ebenfalls radial ausgerichtet sind und beidseitig der Innen-Stirnwand 33 über die Zigarettengruppe 11 hinausstehende Ecklappen 75 der Innen-Stirnwand 33 gegen die Kragen-Seitenwände 40 legen, während die Zigarettengruppe 11 mit dem Innenzuschnitt 26 in die Tasche 64 eingeschoben wird (Fig. 10).

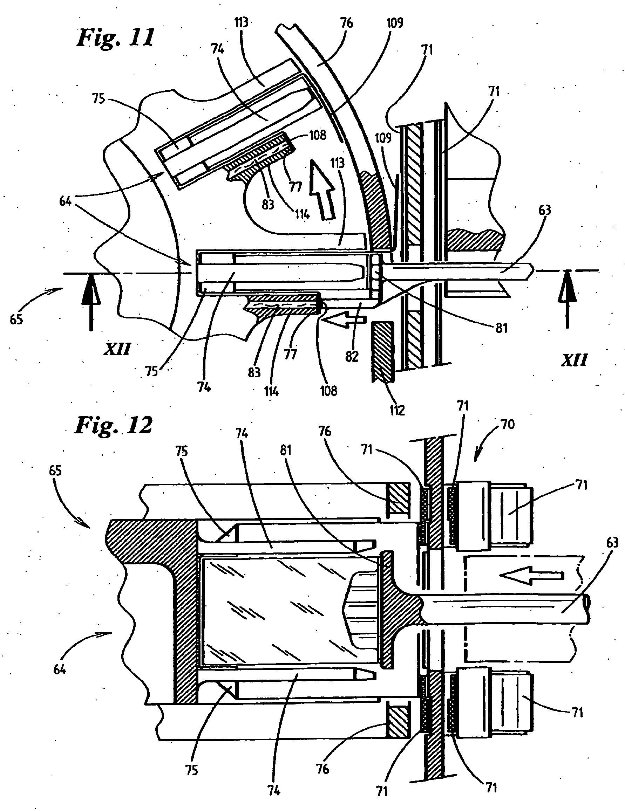

Eine Besonderheit besteht dabei darin, dass der Schieber 63 eine aufrechte Schieberplatte 81 aufweist, die zur Anlage an der Innen-Stirnwand 33 der Innenpackung 13 bestimmt ist. Weiterhin ist unterhalb der Schieberplatte 81 eine in Förderrichtung vorstehende Schiebernase 82 ausgebildet. Die Schiebernase 82 erstreckt sich im Bereich der Innen-Rückwand 34 und sorgt dafür, dass ein unterer Faltlappen 108 des Innenzuschnitts 26 für die Flossennaht 37 an eine jeder Tasche 64 zugeordneten Siegelleiste 77 mit mehreren voneinander beabstandeten Saugkanälen 83 angelegt wird (Fig. 11). Die Schiebernase 82 steht soweit gegenüber der Schieberplatte 81 vor, dass ein Randbereich des Faltlappens 108 gegen die Siegelleiste 77 der Tasche 64 gedrückt wird, wo er mittels Unterdruck gehalten wird.

Im Bereich der vorstehend beschriebene Einschubstation ist eine Außenführung 76 am Umfang des Faltrevolvers 65 angeordnet, die dazu führt, dass ein anfangs radial aus der Tasche 64 herausstehender Faltlappen 109 zur Bildung der Flossennaht 37 gegen den Umfang des Faltrevolvers 65 gelegt wird, sobald der Faltrevolver 65 eine Position weitergedreht wird. Auf diese Weise befindet sich ein Faltlappen 109 am Umfang des Faltrevolvers 65 seitlich neben der Zigarettengruppe 11 und ein anderer Faltlappen 108 an der Siegelleiste 77 der jeweiligen Tasche 64.

In Verlängerung der Außenführung 76 ist zudem im Bereich der Einschubstation eine in vertikaler Richtung bewegliche Gegenführung 102 angeordnet. Die Gegenführung 102 dient dazu zusammen mit dem unteren freien Ende der Außenführüng 76 ein Mundstück zu bilden, durch das die Zigarettengruppe 11 mit dem Innenzuschnitt 26 hindurchgeführt wird. Durch die Gegenführung 102 und die Außenführung 76 wird der Innenzuschnitt 26 gegen die Zigarettengruppe 11 bzw. den Kragen 18 gelegt. Die Gegenführung 102 und die Außenführung 76 werden zudem in einem solchen Abstand zueinander positioniert, dass der Innenzuschnitt 26 gegen die Zigarettengruppe 11 bzw. den Kragen 18 gedrückt wird. Durch die entstehende Reibung wird verhindert, dass sich der Innenzuschnitt 26 beim Einschieben gegenüber der Zigarettengruppe 11 verschiebt, insbesondere schräg stellt oder entgleitet (Fig. 10). Diese Maßnahme steht damit im Zusammenhang, dass Taschenwände 113, 114 der Tasche 64 eine unterschiedliche Länge aufweisen. Eine Taschenwand 113 erstreckt sich über die volle Länge der Zigarettengruppe 11, wohingegen die gegenüberliegende Taschenwand 114 kürzer ist und die Siegelleiste 77 aufweiset. Entsprechend kommt der Innenzuschnitt 26 beim Einschieben zunächst in Kontakt mit der längeren Taschenwand 113 und könnte sich dabei verschieben, wenn nicht der Innenzuschnitt 26 gegen die Zigarettengruppe 11 bzw. den Kragen 18 gedrückt würde.

Nach dem Einschieben der Zigarettengruppe und des Kragens 18 in die Tasche 64 wird die Gegenführung 102 weiter von der Außenführung 76 beabstandet, um den Durchtritt des Schiebers 63 zu ermöglichen (Fig. 11).

Eine weitere Besonderheit besteht darin, dass zunächst die Flossennaht 37 im Bereich der Innen-Rückwand 34 gesiegelt wird und erst danach die Faltlappen 110, 111 im Bereich der Innen-Seitenwände 35.

Die Siegelung der Flossennaht 37 erfolgt in drei Siegelstationen 78 während des taktweisen Transports der Innenpackungen 13 auf dem Faltrevolver 65. In den Siegelstationen 78 ist jeweils ein Siegelorgan beispielsweise eine beheizbare Siegelbacke 79 am Umfang des Faltrevolvers 65 angeordnet. Die Siegelbacke 79 kann durch einen nicht gezeigten Antrieb in radialer Richtung zum Faltrevolver 65 bewegt werden, um die beiden Faltlappen 108, 109 des Innenzuschnitts 26 für die Flossennaht 37 durch Druck und Hitze zu siegeln. Dabei wird die Siegelbacke 79 durch eine Ausnehmung 80 in der Außenführung 76 bewegt unter Mitnahme des zweiten Faltlappens 109 für die Flossennaht 37 gegen die Siegelleiste 77. Nach dem (teilweisen) Siegeln der Flossennaht 37 wird die Siegelbacke 79 von der Siegelleiste 77 beabstandet, sodass der Faltrevolver 65 eine Station weiterbewegt werden kann.

Im vorliegenden Ausführungsbeispiel weist der Faltrevolver 65 zwölf Taschen 64 auf. Die drei Siegelstationen 78 befinden sich in einer 11, 12 und 1 Uhr-Position. In jeder Siegelstation 78 werden die Faltlappen 108, 109 des Innenzuschnitts 26 im Bereich der Flossennaht 37 gesiegelt, sodass insgesamt eine ausreichend dichte bzw. feste Verbindung gegeben ist. Je nach Umlaufzeiten auf dem Faltrevolver 65 kann auch eine größere oder eine geringere Anzahl von Siegelstationen 78 vorgesehen sein.

Während der Herstellung der Flossennaht 37 sind die Faltlappen 110, 111 des Innenzuschnitts 26 für die Innen-Seitenwände 35 noch nicht gefaltet und stehen im Wesentlichen seitlich ab. Die Faltung dieser Seitenlappen erfolgt erst nach Ausschub der Innenpackungen 13 aus dem Faltrevolver 65.

In einer Ausschubstation des Faltrevolvers 65 in einer 9-Uhr-Stellung werden die teilweise gesiegelten Innenpackungen 13 mit der Flossennaht 37 im Bereich der Innen-Rückwand 34 nach oben weisend aus dem Faltrevolver 65 ausgeschoben und an einen horizontalen Förderer 85 übergeben. Dies erfolgt durch den im Inneren des trommelartig ausgebildeten Faltrevolvers 65 angeordneten Schieber 66. Dieser schiebt die Innenpackungen 13 in den Bereich des anschließenden Förderers 85. Dabei wird die Flossennaht 37 durch ein unteres Ende der Außenführung 76 entgegen der Förderrichtung gegen die Innen-Rückwand 34 gelegt bzw. gefaltet.

Auch der Förderer 85 ist taktweise angetrieben und verfügt über seitliche, im Querschnitt C-förmige Führungen 86 in denen die mit Abstand zueinander angeordneten Innenpackungen 13 taktweise entlang des horizontalen Förderers 85 verschoben werden können. Hierzu dient ein Schieber 87, der durch ein nicht gezeigten Antrieb jeweils zwei Innenpackungen 13 erfasst und eine Position weitertransportiert. Der Schieber 87 weist oberseitig zwei Vertiefungen 88 auf, die jeweils zur Aufnahme einer Innenpackung 13 bemessen sind. Als weitere Besonderheit weisen die Führungen 86 im Einlaufbereich einen Faltfinger 90 auf, zum beiderseitigen Umlegen der weiteren Ecklappen 89.

Danach werden während des Transports der Innenpackung 13 die Faltlappen 110, 111 im Bereich der Innen-Seitenwände 35 gefaltet. Dies kann durch nicht gezeigte Faltweichen erfolgen, die aus dem Stand der Technik grundsätzlich bekannt ist. Eine weitere Besonderheit besteht aber in der Abfolge der. Faltung. Zunächst werden nämlich die im Bereich der Innen-Rückwand 34 seitlich abstehenden Faltlappen 110, die auch die Flossenfaltung 37 aufweisen, gegen den Packungsinhalt gefaltet und danach die im Bereich der Innen-Vorderwand 32 seitlich abstehenden Faltlappen 111. Auf diese Weise wird die couvert-artige Faltung während des Transports der Innenpackung 13 auf dem Förderer 85 komplettiert und die Innenpackung 13 dann durch den Schieber 87 in Taschen 91 eines anschließenden Siegelrevolvers 92 eingeführt. Nach Übergabe der teilweise gefalteten Innenpackung 13 befindet sich diese in einer Konfiguration gemäß Fig. 4 auf dem taktweise angetriebenen Siegelrevolver 92.

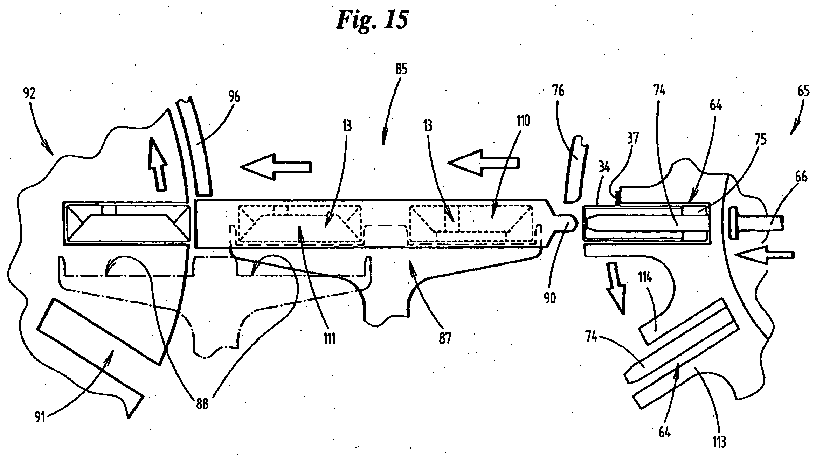

Die Taschen 91 des um eine horizontale Achse drehenden Siegelrevolvers 92 sind radial gerichtet und dienen zur Aufnahme jeweils einer Innenpackung 13. In einer Einschubstation des Siegelrevolvers 92 gemäß Fig. 15 ist eine Tasche 91 zur Aufnahme der Innenpackung 13 in Verlängerung des Förderers 85 fluchtend mit diesem ausgerichtet. Nach der Siegelung der Innenpackung 13 im Bereich der Innen-Seitenwände 35 während des Umlaufs auf dem Siegelrevolver 92 werden die Packungen in einer der Einschubstation gegenüberliegenden Ausschubstation ausgeschleust. Die Siegelung erfolgt also innerhalb einer Drehung des Siegelrevolvers 92 um 180°.

Im vorliegenden Fall sind vier Siegeleinrichtungen 93 vorgesehen, nämlich in einer elf-Uhr-, zwölf-Uhr-, ein-Uhr- und zwei-Uhr-Position. Die Siegeleinrichtungen 93 bestehen jeweils aus zwei Siegelbacken 94 die von beiden Seiten vollflächig gegen die Innen-Seitenwände 35 der Innenpackung 13 gedrückt werden können. Während der Stillstandsphase des Siegelrevolvers 92 findet entsprechend die Siegelung der Faltlappen 110, 111 in vier aufeinander folgenden Stationen statt. Es versteht sich, dass sowohl eine größere als auch eine geringere Anzahl von Siegeleinrichtungen 93 vorgesehen sein kann. Die Siegeleinrichtungen 93 können auch an anderen Positionen angeordnet sein.

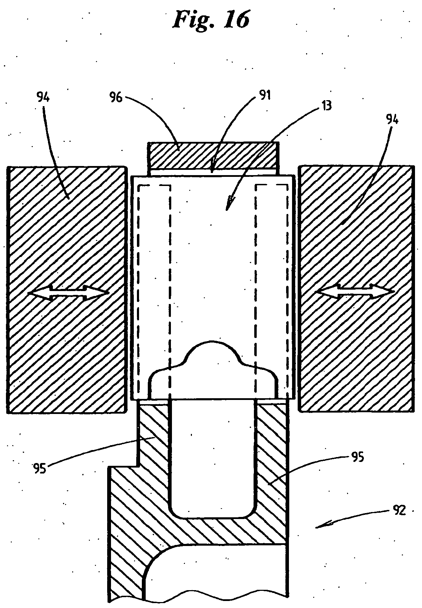

Wie insbesondere Fig. 16 zeigt, verfügt der Siegelrevolver 92 über zwei in parallelen Ebenen angeordnete Revolverscheiben 95, die mit Abstand zueinander angeordnet sind. In den Revolverscheiben 95 sind Ausnehmungen angeordnet zur Bildung der radialen Taschen 91. Zum Einschieben der Innenpackungen 13 in die Taschen 91 greift der Schieber 87 zwischen die beiden Revolverscheiben 95 ein. Weiterhin ist eine Außenführung 96 entlang des Transportwegs der Innenpackungen 13 am Umfang des Siegelrevolvers 92 vorgesehen. Die Siegelbacken 94 werden zum Siegeln in horizontaler Richtung gegen die Innen-Seitenwände 35 bewegt bzw. nach dem Siegeln wieder entfernt zum weiteren Transport des Siegelrevolvers 92 um eine Position.

Der Ausschub der vollständig gesiegelten Innenpackungen 13 erfolgt in der bereits genannten Ausschubstation. Dort werden die Packungen durch einen horizontalen Abförderer 97 erfasst, der wie der Schieber 87 zwischen die Revolverscheiben 95 eingreift, um eine Packung aus einer Tasche 91 zu entnehmen. Auf dem Abförderer 97 liegen die Innenpackungen 13 mit der Innen-Rückwand 34 nach unten weisend auf einem Fördertrum 98 zwischen Mitnehmern 99 desselben.

Im Bereich Abförderers 97 können Coupons 100 oder andere Druckträger auf die Innen-Vorderwände 32 der Dichtblöcke 25 aufgelegt werden. Hierzu geeignete Couponaufleger und Magazine zum Bereithalten der Coupons 100 sind aus dem Stand der Technik bekannt.

Weiterhin vorgesehen ist eine Einheit zum Vereinzeln, Zuführen und Auflegen vom Kragen 16 zu den Dichtblöcken 25. Fig. 5 zeigt hierzu die Zuführung einer fortlaufenden Materialbahn 101 sowie eine daran anschließende Schneideinrichtung 102 mit Messerwalze 103 und Gegenwalze 104 zum Abtrennen der Kragen 16 aus der Materialbahn 101. Die vereinzelten Kragen 16 werden nachfolgend auf Abstand zueinander gebracht und dann an einen Querförderer 105 übergeben, der die Kragen 16 in Richtung des Förderers 97 transportiert bis oberhalb der Dichtblöcke 25. Dort werden sie von einem Krageneinschieber 106 auf die Dichtblöcke 25 aufgelegt. Die Vorrichtung kann ich diesem Bereich gemäß EP 0 496 261 B1 oder EP 0 667 232 B1 aus dem Hause der Anmelderin ausgebildet sein.

Im Anschluss an die Zuführung der Kragen 16 werden die Dichtblöcke 25 an einen Faltrevolver 107 übergeben, in dem vorgefaltete Zuschnitte für die Außenpackung 12 bereitgehalten werden. Die Packung 10 wird dann auf dem Faltrevolver 107 in bekannter Weise komplettiert.

Es versteht sich, dass die Zuführung von Coupons 100 und Kragen 16 optional ist und nicht zwingend vorhanden sein muss.

**Bezugszeichenliste:**

| | | | |
|---|---|---|---|
| 10 | Packung | 36 | Innen-Bodenwand |
| 11 | Zigarettengruppe | 37 | Flossennaht |
| 12 | Außenpackung | 38 | Innenkragen |
| 13 | Innenpackung | 39 | Kragen-Vorderwand |
| 14 | Schachtelteil | 40 | Kragen-Seitenwand |
| 15 | Deckel | 42 | Ausnehmung |
| 16 | Kragen | 43 | Fortsatz |
| 17 | Schachtel-Vorderwand | 44 | Faltlinie |
| 18 | Bodenwand | 45 | Griffzunge |
| 19 | Schachtel-Rückwand | 46 | Zigarettenmagazin |
| 20 | Deckel-Rückwand | 47 | Stößel-Paket |
| 21 | Stirnwand | 48 | Tasche |
| 22 | Deckel-Vorderwand | 49 | Revolver |
| 23 | Schachtel-Seitenwand | 50 | Zigaretten-Weiche |
| 24 | Deckel-Seitenwand | 51 | Schieber |
| 25 | Dichtblock | 52 | Revolver |
| 26 | Innenzuschnitt | 53 | Tasche |
| 27 | Öffnungslasche | 54 | Materialbahn |
| 28 | Schwächungslinie | 55 | Schneideinrichtung |
| 29 | Betätigungslasche | 56 | Messerwalze |
| 30 | Stanzlinie | 57 | Gegenwalze |
| 31 | Verschlussstreifen | 58 | Förderwalzenpaar |
| 32 | Innen-Vorderwand | 59 | Stempel |
| 33 | Innen-Stirnwand | 60 | Querförderer |
| 34 | Innen-Rückwand | 61 | Formtasche |
| 35 | Innen-Seitenwand | 62 | Schieber |
| 63 | Schieber | 99 | Mitnehmer |
| 64 | Tasche | 100 | Coupon |
| 65 | Faltrevolver | 101 | Materialbahn |
| 66 | Schieber | 102 | Schneideinrichtung |
| 67 | Materialbahn | 103 | Messerwalze |
| 68 | Umlenkrolle | 104 | Gegenwalze |
| 69 | Pendelspeicher | 105 | Querförderer |
| 70 | Saugförderer | 106 | Krageneinschieber |
| 71 | Fördertrum | 107 | Faltrevolver |
| 73 | Schieberplatte | 108 | Faltlappen |
| 74 | Faltfinger | 109 | Faltlappen |
| 75 | Ecklappen | 110 | Faltlappen |
| 76 | Außenführung | 111 | Faltlappen |
| 77 | Siegelleiste | 112 | Gegenführung |
| 78 | Siegelstation | 113 | Taschenwand |
| 79 | Siegelbacke | 114 | Taschenwand |
| 80 | Ausnehmung | | |
| 81 | Schieberplatte | A | Abstand |
| 82 | Schiebernase | | |
| 83 | Saugkanal | | |
| 85 | Förderer | | |
| 86 | Führung | | |
| 87 | Schieber | | |
| 88 | Vertiefung | | |
| 89 | Ecklappen | | |
| 90 | Faltfinger | | |
| 91 | Tasche | | |
| 92 | Siegelrevolver | | |
| 93 | Siegeleinrichtung | | |
| 94 | Siegelbacke | | |
| 95 | Revolverscheibe | | |
| 96 | Außenführung | | |
| 97 | Abförderer | | |
| 98 | Fördertrum | | |

## Patentansprüche

1. Packung für stückiges Verpackungsgut, insbesondere für Zigaretten, bestehend aus einer Außenpackung (12) vorzugsweise in der Ausführung als Klappschachtel und einer Innenpackung (13) als Dichtblock (25) mit einer den Packungsinhalt, insbesondere eine Zigarettengruppe (11), umgebenden Innenzuschnitt (26) aus vorzugsweise aroma- und feuchtigkeitsdichter, thermisch siegelbarer Folie, die im Bereich einer Innen-Stirnwand (33) eine mehrfach benutzbare Öffnungshilfe und im Bereich von Seitenwänden der Innenpackung (13) durch thermisches Siegeln miteinander verbundene Faltlappen aufweist, wobei Faltlappen (108, 109) im Bereich einer Innen-Rückwand (34) des Innenzuschnitts (26) als Flossenfaltung ausgebildet und durch thermisches Siegeln außerhalb des Bereichs der Zigarettengruppe (11) zu einer Flossennaht (37) miteinander verbunden sind, und wobei die Flossennaht (37) mit Abstand zu Bereichen von einander mehrfach überdeckenden Faltlappen im Bereich der Innen-Seitenwände (35) angeordnet ist, und wobei Faltlappen (110, 111) im Bereich von Innen-Seitenwänden (35) des Innenzuschnitts (26) couvertartig gefaltet sind unter Einbeziehung von Ecklappen (75, 89) des Innenzuschnitts (26), und wobei die Flossennaht (37) außerhalb eines Bereichs der einander überlappenden Ecklappen (75, 89) und Faltlappen (110, 111) im Bereich der Couvertfaltung angeordnet ist, und wobei innerhalb des Dichtblocks (25) eine Abdeckung aus wärme- und druckbelastbarem Material in der Ausführung eines Innenkragens (38), vorzugsweise aus Karton, angeordnet ist, wobei im Bereich der die Flossennaht (37) aufweisenden Innen-Rückwand (34) keine Abdeckung vorgesehen ist, **gekennzeichnet durch** folgende Merkmale:
a) die Flossennaht (37) ist mit einem geringen Abstand (A) von wenigen Millimetern, vorzugsweise mit einem Abstand (A) von 2 bis 3 Millimetern, zu einem Bereich von überlappenden Ecklappen (75, 89) und Faltlappen (110, 111) angeordnet,
b) der Innenkragen (38) ist mit Kragen-Vorderwand (39) und Kragen-Seitenwänden (40) im Bereich der Innen-Seitenwände (35) und der der Innen-Rückwand (34) gegenüberliegenden Innen-Vorderwand (32) angeordnet.

2. Packung nach Anspruch 1, **dadurch gekennzeichnet, dass** Faltlappen (110, 111) des Innenzuschnitts (26) im Bereich der Innen-Seitenwänden (35) unter Bildung einer wechselseitigen Überdeckung in der Ebene der Innen-Seitenwände (35) gefaltet und durch thermisches Siegeln miteinander verbunden sind, wobei die die Flossennaht (37) aufweisende Faltlappen (110) der Innen-Rückwand (34) am Packungsinhalt anliegen und die Faltlappen (111) der Innen-Vorderwand (32) jeweils auf die die Flossennaht (37) aufweisenden Faltlappen (110) der Innen-Rückwand (34) gefaltet sind.

## Claims

1. A pack for piece-form articles, in particular for cigarettes, comprising an outer pack (12), preferably configured as a hinge-lid box, and an inner pack (13) as a sealed block (25) with an inner blank (26) which encloses the pack contents, in particular a cigarette group (11), and is made of preferably aroma-tight and moisture-tight, thermally sealable sheet material, the inner pack having, in the region of an inner end wall (33), an opening aid which can be used a number of times and, in the region of side walls of the inner pack (13), folding flaps which are connected to one another by thermal sealing, wherein folding flaps (108, 109) in the region of an inner rear wall (34) of the inner blank (26) are designed as a fin fold and are connected to one another by thermal sealing outside the region of the cigarette group (11) to form a fin seam (37), and wherein the fin seam (37) is arranged at a spacing from regions of folding flaps which cover one another multiple times in the region of the inner side walls (35), and wherein folding flaps (110, 111) in the region of inner side walls (35) of the inner blank (26) are folded in the manner of an envelope with the incorporation of corner flaps (75, 89) of the inner blank (26), and wherein the fin seam (37) is arranged outside a region of the corner flaps (75, 89) and folding flaps (110, 111) which overlap one another in the region of the envelope fold, and wherein a covering made from material which is resistant to heat and compressive stress and configured as an inner collar (38), preferably made from cardboard, is arranged within the sealed block (25), wherein no covering is provided in the region of the inner rear wall (34) which has the fin seam (37), **characterized by** the following features:
a) the fin seam is arranged at a small spacing (A) of a few millimetres, preferably at a spacing (A) of from 2 to 3 millimetres, from a region of overlapping corner flaps (75, 89) and folding flaps (110, 111),
b) the inner collar (38) with collar front wall (39) and collar side walls (40) is arranged in the region of the inner side walls (35) and the inner front wall (32) located opposite the inner rear wall (34).

2. The pack as claimed in claim 1, **characterized in that** folding flaps (110, 111) of the inner blank (26) in the region of the inner side walls (35) are folded so that they cover over one another in the plane of the inner side walls (35), and are connected to one another by thermal sealing, wherein the folding flaps (110) of the inner rear wall (34) which have the fin seam (37) bear against the pack contents, and the folding flaps (111) of the inner front wall (32) are folded in each case onto the folding flaps (110) of the inner rear wall (34) which have the fin seam (37).

## Revendications

1. Emballage pour une matière à emballer en pièces, en particulier pour des cigarettes, se composant d'un emballage extérieur (12) de préférence sous la forme d'une boîte pliante et d'un emballage intérieur (13) en forme de bloc étanche (25) avec un coupon intérieur (26) entourant le contenu de l'emballage, en particulier un groupe de cigarettes (11), en une feuille de préférence étanche aux arômes et à l'humidité, pouvant être soudée à chaud, qui présente dans la région d'une paroi frontale interne (33) une aide à l'ouverture utilisable plusieurs fois et dans la région de parois latérales de l'emballage intérieur (13) des volets pliables assemblés l'un à l'autre par soudage à chaud, dans lequel des volets pliables (108, 109) sont réalisés par pliage en forme de coussin dans la région d'une paroi arrière intérieure (34) du coupon intérieur (26) et ils sont assemblés l'un à l'autre par soudage à chaud à l'extérieur de la région du groupe de cigarettes (11) en une soudure en éventail (37), et dans lequel la soudure en éventail (37) est disposée à distance de régions de volets pliables se recouvrant plusieurs fois dans la région des parois latérales intérieures (35), et dans lequel des volets pliables (110, 111) sont repliés en enveloppe dans la région de parois latérales intérieures (35) du coupon intérieur (26) avec incorporation de volets de coin (75, 89) du coupon intérieur (26), et dans lequel la soudure en éventail (37) est disposée à l'extérieur d'une région des volets de coin (75, 89) et des volets pliables (110, 111) se recouvrant mutuellement dans la région du pliage enveloppe, et dans lequel un recouvrement en matériau résistant à la chaleur et à la pression sous la forme d'un étui intérieur (38), de préférence en carton, est disposé à l'intérieur du bloc étanche (25), dans lequel il n'est prévu aucun recouvrement dans la région de la paroi arrière intérieure (34) présentant la soudure en éventail (37), **caractérisé par** les caractéristiques suivantes:
a) la soudure en éventail (37) est disposée à une faible distance (A) de quelques millimètres, de préférence à une distance (A) de 2 à 3 millimètres, d'une région de volets de coin (75, 89) et de volets pliables (110, 111) qui se chevauchent,
b) l'étui intérieur (38) est disposé avec une paroi avant d'étui (39) et des parois latérales d'étui (40) dans la région des parois latérales intérieures (35) et de la paroi avant intérieure (32) opposée à la paroi arrière intérieure (34).

2. Emballage selon la revendication 1, **caractérisé en ce que** des volets pliables (110, 111) du coupon intérieur (26) sont pliés dans la région des parois latérales intérieures (35) avec formation d'un recouvrement mutuel dans le plan des parois latérales intérieures (35) et sont assemblés l'un à l'autre par soudage à chaud, dans lequel les volets pliables (110) de la paroi arrière intérieure (34) présentant la soudure en éventail (37) sont appliqués sur le contenu de l'emballage et les volets pliables (111) de la paroi avant intérieure (32) sont pliés respectivement sur les volets pliables (110) de la paroi arrière intérieure (34) présentant la soudure en éventail (37).
